# EUROPEAN PATENT APPLICATION

(11) **EP 4 047 266 A1**
(43) Date of publication of application: **24.08.2022**
(21) Application number: 22157558.2
(22) Date of filing: 18.02.2022
(51) Int. Cl.: F21V 33/00, F21V 8/00, A47G 1/02, F21Y 103/10, F21Y 105/18, F21W 131/302

(54) **LIGHTING DEVICE**

(30) Priority: 19.02.2021 IT 202100003923
(71) Applicant: Sasso Martino, 36100 Vicenza (IT)
(72) Inventor: SASSO, Martino, 36100 Vicenza (IT)
(74) Representative: Piovesana, Paolo

(57) **Abstract**

Lighting device (1) comprising:
- a main body (2) made of transparent material and containing light diffusing elements (4),
- a reflecting layer (6) associated with a first surface area of said main body (2) and configured to reflect light in the visible window,
- at least one illuminating element (8) associated with a second surface area of said main body (2) which is distinct from said first surface area,
and characterized in that, in correspondence with said first surface area, said main body (2) and said reflective layer (6) define a contact interface with a roughness lower than 500 nm.

## Description

The present invention relates to a lighting device.

Lighting devices are known which comprise a main body made of a material intended to diffuse the light, generally a type of polymethyl-methacrylate (PMMA). Said devices generally comprise one or more light sources intended to illuminate a layer configured to diffuse the incident light giving the device a "diffused light" effect, which allows to avoid direct irradiation of a user.

However, these known devices are not fully satisfactory since when the light is off they are devoid of ornamental interest, and furthermore they appear of little value to the eye, since it is evident, even for the inexperienced user, that they are made of plastic materials, which are usually regarded as the inexpensive alternative to glass.

Reflecting devices are also known which are composed of a substantially laminar main body made of transparent material, which has, on one of the major surfaces, a reflective coating, which substantially gives reflective characteristics to the device.

DE 10 2012 103512 discloses a mirror which comprises a reflecting layer on which a light guiding layer composed of a polymer in which particles that diffuse light are dispersed, and luminous elements are dispersed. However, this solution is not fully satisfactory since the realization of a reflective interface is not simple and can be very expensive.

FR 2953 703 describes a mirror composed of a reflecting layer and a glass layer, the lateral surface of which is associated with LEDs. The main surface of the glass layer can be treated in order to generate light diffusion centers in order to spread the light generated by the LEDs in the direction from which a user is looking.

However, this solution is not fully satisfactory since the diffusion centers, which are substantially defined by rough portions of glass, obtained by chemical or laser etching or other methods, also diffuse the light reflected by the reflective state, and therefore do not allow a correct reflection of the image.

KR 10-1098742 describes a mirror made of polymeric material on the side of which LED lights are positioned. On the back of the transparent polymer layer, light scattering centers are positioned, which can for example be engraved on the surface of the polymer.

However, even this solution is not fully satisfactory since the diffusion centers also diffuse the light reflected by the reflecting state, and therefore do not allow a correct reflection of the image.

DE 37 44 312 discloses a multilayer mirror.

The object of the invention is to propose a lighting device which allows to overcome the drawbacks of the known devices.

Another object of the invention is to propose a lighting device that allows to illuminate an environment with a diffused light.

Another object of the invention is to propose a lighting device that allows the light to be channeled.

Another object of the invention is to propose a lighting device which has a pleasant and/or interesting appearance even when it is in an off condition.

Another object of the invention is to propose a lighting device that can be used as a mirror.

Another object of the invention is to propose a lighting device which can be easily implemented and with low costs.

Another object of the invention is to propose a lighting device which allows to consume low quantities of energy to illuminate an environment.

Another object of the invention is to propose a lighting device that can be installed in a large number of positions and configurations.

Another object of the invention is to propose a lighting device that can be made with innovative and/or artistic designs, which give the user the impression of being in front of a valuable product.

Another object of the invention is to propose a lighting device that can be hung on a wall.

Another object of the invention is to propose a lighting device which is alternative and/or improvement with respect to the known solutions.

All these purposes, both individually and in any combination thereof, and others that will emerge from the following description, are achieved, according to the invention, with a lighting apparatus with the characteristics indicated in claim 1 and with a method according to claim 13.

The present invention is further clarified hereinafter in some of its preferred embodiments reported for purely illustrative and non-limiting purposes with reference to the attached drawings, in which:
- figures 1a, b: show a front view of the device in a first embodiment in condition of light off and on, respectively,
- figures 2a, b: show a front view of the device in a second embodiment in condition of light off and on, respectively,

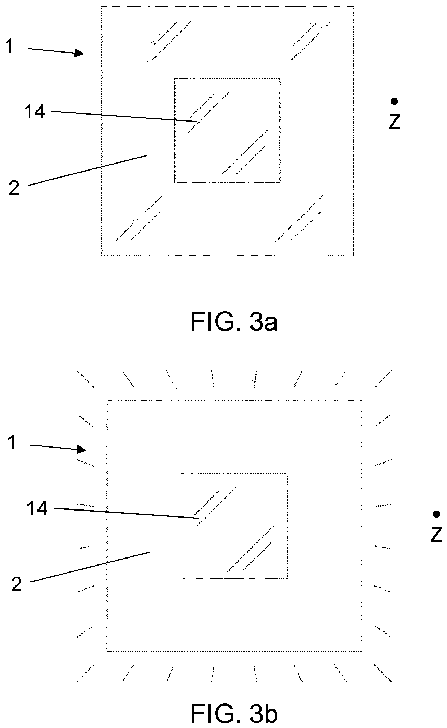

- figures 3a, b: show in front view the device in a third embodiment in condition of light off and on, respectively,
- figs re 4a, b: show in section the device in said second embodiment in condition of light off and on, respectively,
- figure 4c: shows in section the device in a fourth embodiment, in condition of light off, with the layers of the film highlighted, and
- figures 5a-c: show the device in a fifth embodiment in the condition of light off in perspective view (a) and in section (b), and in condition of light on in section (c).

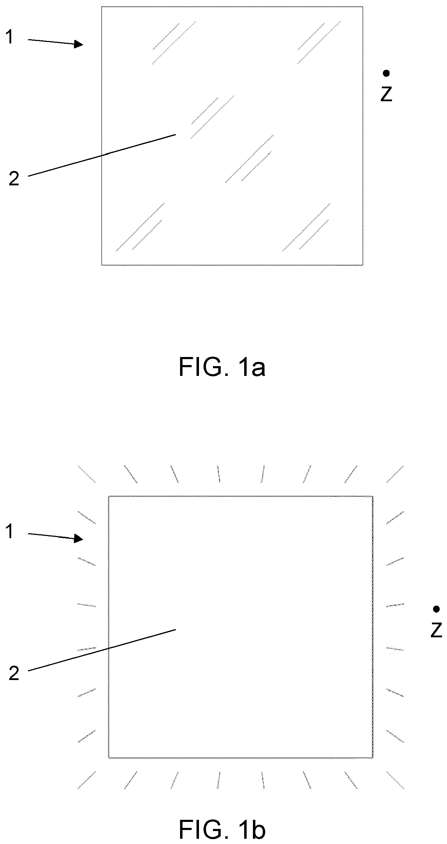

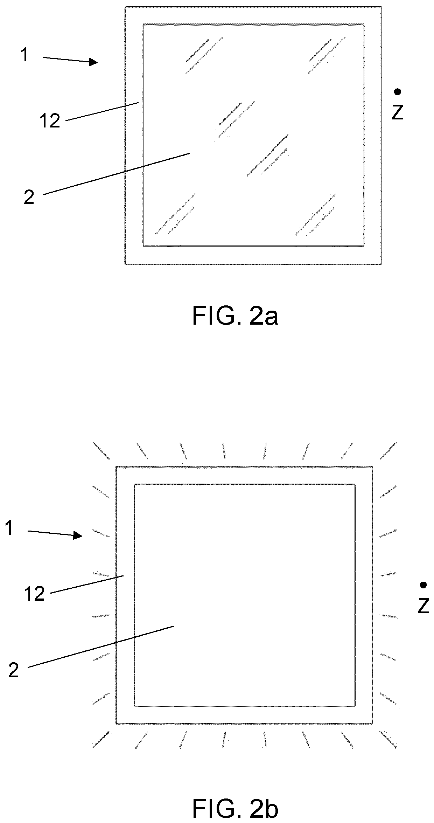

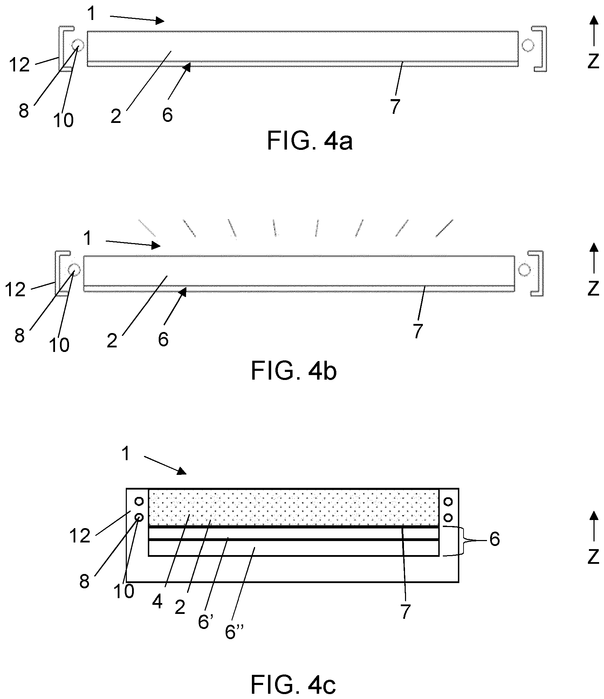

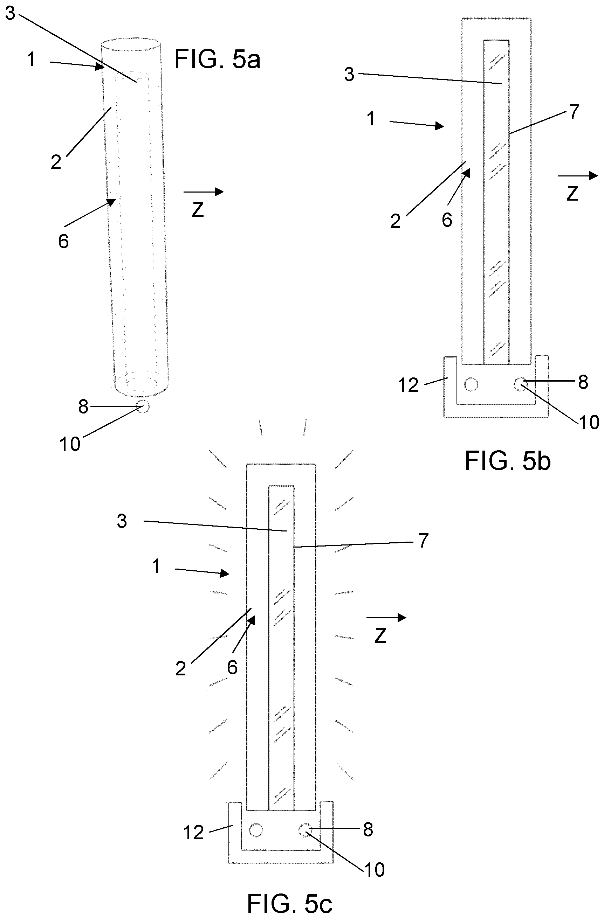

As is clear from the figures, the device 1 comprises a main body 2. The main body 2 can have a substantially laminar shape - i.e. one of its dimensions is much smaller than the other two -, cf. fig. 1, 2, or it can have a substantially three-dimensional shape, for example cylindrical, cfr. fig. 4, 5.

Hereinafter Z designates the direction from which the user looks at the device 1 according to the invention. Preferably the direction Z can be substantially perpendicular to the main surface of the main body 2. Conveniently in some embodiments a plurality of directions Z can be possible, in particular in the example of fig. 5 can be considered as directions from which the device is seen all radial directions with respect to the cylinder, only one is represented for clarity.

Advantageously, the main body 2 can have one or more cavities 3, including through holes. Advantageously, said cavities 3 can have a substantially smooth surface, or, alternatively, they can have a substantially wavy and/or rough surface.

Preferably the main body 2 can be made of substantially transparent material - i.e. with a visible light transmission coefficient for example higher than 70%, and preferably higher than 80% - for example it can be made of plastic material, such as PMMA, or alternatively it can be made of glass. In one embodiment the main body 2 can be made of substantially transparent and/or translucent and colored materials. Preferably the main body 2 is made of PMMA.

Advantageously, the main body 2 can have main surfaces - i.e. the two surfaces of greater extension - substantially smooth, i.e. have a surface roughness of less than 500 nm, and preferably between 50 and 500nm, preferably measured with a profilometer, or with another appropriate device (confocal microscopy, scanning electron microscopy or other).

Advantageously, the main body 2 can be made by thermoforming, or by injection molding, or by known methods. In a preferred embodiment, the main body 2 can be made by extrusion. Preferably the main body 2 can not be made by casting.

Advantageously, the material with which the main body 2 is made can comprise within it a substantially homogeneous dispersion of light diffusing elements 4. Advantageously, said light diffusing elements can be nano-particles, for example of BaSO₄, or, preferably, of TiO₂, or other conductive oxides. Advantageously, said nano-particles can have a size comprised between 150 and 500 nm, and preferably between 170 and 450 nm, and more preferably between 220 and 400 nm. Advantageously, if said light diffusing elements 4 are nano-particles, these can be present in quantities ranging from 0.1 to 10% by weight, on the total weight of the main body 2.

Advantageously, said main body 2 can be associated with a reflective layer 6 configured to reflect the light which incising on the reflective layer itself. Conveniently, said reflective layer can be associated with a surface area 7, which is preferably located in correspondence with one of the main surfaces of the main body 2. Preferably said reflective layer 6 can be substantially continuous. Advantageously, the reflecting layer 6 can cover the entire surface area 7 of the main body 2 on which it is applied.

Advantageously, the reflecting layer 6 can be configured to reflect substantially homogeneously all the wavelengths of the incident radiation, in particular in the visible window - i.e. between 200 and 800 nm. In one embodiment, the reflective layer 6 can be configured to reflect it can be configured to predominantly reflect one or more wavelengths, in particular the reflective layer 6 can be made of a colored material, or it can have an appropriate surface structure. In an embodiment not shown, the reflecting layer 6 can be composed of several semi-layers 6', 6" superimposed, for example which have different dielectric constant values, and therefore suitable for generating interference phenomena with the visible light in the Z direction.

Advantageously, the reflecting layer 6 can be associated with the main body 2 so as to form a substantially clear interface, and preferably to form a substantially smooth interface, and in particular having a roughness of less than 500 nm.

Advantageously, the reflecting layer 6 can substantially act as a mirror.

Conveniently, the reflecting layer 6 can be made, at least partially in metallic material, and preferably in aluminum.

In one embodiment, the reflective state 6 can have a thickness ranging from 300 nm to 1550 nm.

Advantageously, the reflecting layer can be associated with the main body 2 when this has already been made (for example by thermoforming or injection molding). For example, the reflective layer 6 can be associated with the main body by melting, or by vacuum deposition (sputtering), or by vapor deposition (PVD or CVD), preferably with the main body 2 substantially kept at room temperature. Alternatively, it can be deposited starting from a solution, for example by spray-coating, or by dip-coating, or by spin coating.

Conveniently, the reflecting layer 6 can be associated directly with the main body 2.

Conveniently the reflecting layer 6 can be associated with the main body 2 without adhesives.

Conveniently, in the embodiment in which several semi-layers 6', 6" are present, these can be deposited successively one after the other.

In an alternative embodiment not shown, the reflective layer 6 can be replaced by a film associated with the main body 2. Conveniently, the film can comprise a first layer of a support material, preferably of polymeric material, for example of PET, a second layer in substantially reflective material, or in any case configured to give the film itself the appropriate characteristics, for example the characteristics described above. Alternatively, the second layer can be applied to the first support layer by vapor deposition, preferably via PVD.

In an embodiment not shown, said film may further comprise a third layer configured to predominantly absorb one or more wavelengths in order to generate a substantially colored reflection. For example, said third layer can be made of metal and/or polymeric materials, and/or with suitable chemical compounds (e.g. oxides, halides, or chalcogenides of alkaline, alkaline earth metals, transition metals or semimetals).

Optionally, the film can comprise and/or be associated with a fourth layer made of substantially opaque material and configured to prevent the passage of light. Advantageously, the first layer can be configured to substantially go into contact with the main body 2, and the second layer can be configured to be positioned between said first layer and said fourth layer. Advantageously, said third layer can be positioned between said first and said fourth layer. Advantageously, said second layer can be positioned closer to the main body 2 than the third layer. Advantageously, said third layer can be positioned closer to the main body 2 than the second layer.

In a preferred embodiment, the film can be associated with the main body 2 by means of a suitable layer of gluing material, for example by means of an acrylic glue, or by means of high-temperature lamination processes.

Preferably, the reflecting layer 6 can be arranged on the main body so as to form a substantially continuous and/or homogeneous surface. Alternatively, the reflecting layer 6 can be positioned on the main body 2 substantially in patches i.e. forming a discontinuous and/or inhomogeneous surface.

Advantageously, the reflecting layer 6 can be further worked, for example, in order to obtain a sandblasted and/or aged effect.

Conveniently, the surface of the device 1 which is coated with said first and/or second and/or third and/or fourth layer can be spray painted.

Subsequently the device 1 can be subjected to suitable heat treatments.

Advantageously, the device 1 can further comprise at least one lighting element 8 configured to send light radiation, preferably into the visible window, inside the main body.

Advantageously, the illuminating element 8 can comprise a plurality of light sources, for example a plurality of LEDs 10, preferably inserted in a suitable strip. Conveniently, the device 1 also comprises suitable means for supplying electric current to said lighting elements 8, and suitable devices for controlling their operation, for example switches, and preferably comprises at least one rheostat.

Advantageously, the surface of the main body 2 which faces said at least one illuminating element 8 can be glossy and/or transparent, and in particular it can be laser cut.

Advantageously, said illuminating elements 8 can be configured to emit substantially white light, and/or they can be configured to emit substantially colored light.

Conveniently, said illuminating elements 8 can be positioned in correspondence with and/or in proximity to a surface of the main body 2 which is different from that to which the reflecting element is associated.

Advantageously, said illuminating elements 8 can be positioned at and/or near a surface which is substantially perpendicular to that to which the reflecting layer 6 is associated. Furthermore, said illuminating elements 8 can be positioned at and/or near a surface which is perpendicular to that to which the reflecting layer 6 is associated.

Advantageously, the lighting elements 8 can be associated with the main body 2 by means of suitable association means, such as glues, screws or the like. Preferably, the lighting elements 8 can be associated with the main body 2 in a reversible manner, in order to allow their replacement in the event of failure or failure. In one embodiment, the lighting elements 8 can be embedded inside the main body 2, for example during the processing of the central body itself.

Advantageously, the device 1 can further comprise a suitable frame 12 configured to cover, at least partially, one or more of the components of the device itself. Advantageously, said frame 12 can be configured to cover, at least partially, said illuminating elements 8, in particular for example so as to prevent the light emitted by them from being diffused in undesired directions, for example in directions not incident on a surface of the main body 2. Advantageously, said frame 12 can have an internal coating made of substantially reflective material, so as to increase the quantity of light sent towards the main body 2.

In one embodiment, the device 1 according to the invention can comprise a mirroring surface 14 substantially surrounded by the main body 2 and by the reflecting layer 6, in order to substantially perform a frame function.

The method for manufacturing the device 1 according to the invention can comprise the following steps, and preferably consist of the following steps, advantageously in this order:
- one of the main body 2 extrusion step,
- optionally a step of association of said reflective layer 6 to said main body 2, preferably a deposition step, more preferably a step of deposition via PVD, of said reflective layer 6 on said main body
- optionally a step of association of said first, said second and/or said third and/or said fourth layer to said reflective layer 6,
- a step of association of said lighting elements 8 to said main body 2,
- optionally, a step of association of said frame 12 to said main body 2.

Advantageously, the step of association of said lighting elements 8 to said main body 2 can take place simultaneously with the extrusion step, or it can take place after the extrusion step.

The operation of the device 1 according to the invention clearly results from what has been said above. In particular, when the lighting elements are off, the surface of the main body 2 which is opposite to that on which the reflecting layer 6 is associated is substantially the surface of a mirror. Conveniently, on the other hand, when the illuminating elements 8 are switched on, at least partially, the same surface, thanks to the light diffusion properties of the material of which the main body 2 is made, the light emitted by the illuminating elements themselves is diffused, and therefore the device 1 basically acts like a lamp. Preferably the device 1 can be used positioned the surface covered by the reflecting layer 6 in correspondence with a wall, leaving the surface not covered by the reflecting layer visible to the user.

As is clear from what has been said above, the device according to the invention is particularly advantageous in that:
- when the lighting elements are activated it acts as a lamp, while when these are deactivated it acts as a mirror,
- it can be easily modified in its forms in order to obtain captivating and useful optical effects for the realization of design elements,
- in particular compared to DE 10 2012 103512 it guarantees an optimal interaction of the elements that compose it with visible light.

## Claims

1. Lighting device (1) comprising:
- a main body (2) made of transparent material and containing light diffusing elements (4),
- a reflecting layer (6) associated with a first surface area of said main body (2) and configured to reflect light in the visible window,
- at least one illuminating element (8) associated with a second surface area of said main body (2) which is distinct from said first surface area,
and **characterized in that**, in correspondence with said first surface area, said main body (2) and said reflective layer (6) define a contact interface with a roughness lower than 500 nm.

2. Device according to claim 1 **characterized in that** it is made of poly-methyl methacrylate (PMMA) and contains within it a substantially homogeneous diffusion of titanium dioxide nano-particles.

3. Device according to one or more of the preceding claims **characterized in that** said main body (2) is made by extrusion.

4. Device according to one or more of the preceding claims **characterized in that** said light diffusing elements (4) are present in quantities ranging from 0.1 to 10% by weight of the total weight of said main body.

5. Device according to one or more of the preceding claims **characterized in that** said reflective layer (6) is deposited on said first surface area of said main body (2) by vapor phase deposition.

6. Device according to one or more of the preceding claims **characterized in that** said reflective layer (6) is deposited on said first surface area of said main body (2) by physical vapor phase deposition (PVD).

7. Device according to one or more of the preceding claims **characterized in that** said reflective layer (6) has a thickness of between 300 and 1550 nm.

8. Device according to one or more of the preceding claims **characterized in that** said reflecting layer (6) comprises a plurality of half-layers (6', 6") which have different dielectric constants.

9. Device according to one or more of the preceding claims **characterized in that** said at least one illuminating element (8) consists of at least one LED (10), and preferably of at least one LED strip (10).

10. Device according to one or more of the preceding claims **characterized in that** it comprises a frame (12) configured to cover, at least partially, said at least one illuminating element (8).

11. Device according to one or more of the preceding claims **characterized in that** said lighting elements (8) are associated with said frame (12), and preferably are not directly associated with said main body.

12. Device according to one or more of the preceding claims **characterized in that** said at least one illuminating element (8) is positioned at a surface which is substantially perpendicular to the surface to which said reflecting layer (4) is associated.

13. Method for the realization of a device configured to emit light in one direction (Z) and reflect images along the same direction (Z) **characterized in that** it comprises the following steps:
- making available a transparent material containing light diffusing elements (4),
- forming of said material, preferably by extrusion in order to make a main body (2),
- deposition, preferably by physical vapor deposition, of at least one reflective layer (6) on a surface of said main body,
- association to said main body of at least one lighting element (8).

14. Method according to the preceding claim **characterized in that** said main body (2) is subjected to a heat treatment following said forming by extrusion.

15. Use as a mirror and lamp of a device (1) according to one or more of claims 1-12 or made by a method according to one or both of claims 13 and 14, in which the device is positioned with the surface to which the layer is associated reflective (6) at a wall and/or a support for the device itself.
